# EUROPÄISCHE PATENTSCHRIFT

(11) **EP 2 220 172 B1**
(45) Veröffentlichungstag und Bekanntmachung des Hinweises auf die Patenterteilung: **02.03.2016**
(21) Anmeldenummer: 08861951.5
(22) Anmeldetag: 12.12.2008
(51) Int. Cl.: C09C 1/30, C09D 7/12, C09J 11/04, C08K 3/36, C08K 9/06

(54) **HYDROPHOBIERUNG VON KIESELSÄUREN UNTER OXIDIERENDEN BEDINGUNGEN**
HYDROPHOBICIZATION OF SILICAS UNDER OXIDIZING CONDITIONS
HYDROPHOBATION DE SILICES EN CONDITIONS OXYDANTES

(30) Priorität: 19.12.2007 DE 102007055879
(43) Veröffentlichungstag der Anmeldung: 25.08.2010
(73) Patentinhaber: Wacker Chemie AG, 81737 München (DE)
(72) Erfinder: GOTTSCHALK-GAUDIG, Torsten, 84561 Mehring (DE); LUCARELLI, Michael, Mcmurray Pennsylvania 15317 (US)
(74) Vertreter: Fritz, Helmut
(86) Internationale Anmeldenummer: PCT/EP2008/067377
(87) Internationale Veröffentlichungsnummer: WO 2009/077437

(56) Entgegenhaltungen:
- EP-A- 0 924 269
- WO-A-2006/010764
- DE-A1- 4 419 234

## Beschreibung

Die Erfindung betrifft ein Verfahren zur Herstellung hydrophober Kieselsäuren.

Die Oberflächenmodifizierung von hochdispersen Kieselsäuren mit Dimethyldichlorsilan im Fließbett ist bekannt (DE 1163784). Hierbei werden hydrophobe Kieselsäuren erhalten, die neben einem beträchtlichen Anteil unreagierter Kieselsäure-Silanolgruppen eine hochhydrophobe Oberflächenmodifizierung aufweisen. Beim Einsatz dieser Kieselsäuren beispielsweise zur Rheologiekontrolle polarer Beschichtungen bzw. Kleb- und Dichtstoffen kann dies trotz unreagierter Silanolgruppen zu einer verlängerten Einarbeitungszeit in die Formulierungen führen. Ferner ist der Prozeß in Folge der benötigten hohen Temperaturen unwirtschaftlich.

Es ist weiterhin bekannt, hochdisperse Kieselsäuren mit schwerflüchtigen Siloxanen zu modifizieren (EP 686676). Hierbei werden hochhydrophobe Kieselsäuren mit einem sehr geringen Anteil unreagierter Silanolgruppen erhalten. Die hoch-unpolare Oberflächensiloxanschicht kann in polaren Beschichtungs-, Kleb-oder Dichtstoffen zu einer erschwerten Benetzung der Partikel führen, und damit einhergehend zu einer verlängerten Einarbeitungszeit der Kieselsäuren in das flüssige Medium.

Es bestand nun die Aufgabe den Stand der Technik zu verbessern, insbesondere eine Kieselsäure und ein Verfahren zu entwickeln, das zu Kieselsäurepartikeln führt, die im Vergleich zu hydrophoben Kieselsäuren erhalten nach bekannten Verfahren, eine relativ polare Oberflächenmodifizierung bei gleichzeitig unverändertem oder sogar niedrigerem Restsilanolgehalt aufweisen.

Aus EP 924269 ist die Oberflächenmodifizierung von Kieselsäuren mit Dimethyldisiloxygruppen und Monomethyltrisiloxygruppen bekannt. Dabei werden cyclische Siloxane bei hohen Temperaturen (550 - 600 °C) mit der Kieselsäure umgesetzt. Es resultieren Kieselsäuren mit einem erhöhten Kohlenstoffgehalt, d.h. einer besseren Hydrophobierung der Kieselsäure. Die dort beschriebenen Partikel weisen eine höhere Methanolzahl auf, d.h. eine geringe Polarität, als Partikel, die bei niedriger Temperatur zur Reaktion gebracht wurden. Die Reaktionsführung bei hohen Temperaturen ist infolge der Energiekosten unwirtschaftlich. Nachteilig an diesen Partikeln ist, dass sie zwar einen geringeren Anteil an Oberflächensilanolgruppen aufweisen, gleichzeitig aber auch eine höhere Methanolzahl, d.h. eine höhere Hydrophobie aufweisen.

Bekannt ist auch die Co-Silylierung von Kieselsäure mit Dimethyldichlorsilan und Methyltrichlorsilan. Problematisch ist hierbei die deutlich unterschiedliche Reaktivität der Silane, die zu einer inhomogenen Verteilung von D- und T-Gruppen führen kann und das Entstehen großer Mengen an HCl, die vom Produkt abgereinigt werden muß.

Gegenstand der Erfindung sind Kieselsäuren, die mit Gruppen der allgemeinen Formeln (I) und (II)

R₂Si(O-)₂ (I)

RSi(O-)₃ (II)

modifiziert sind, wobei
R ein einwertiger, gegebenenfalls einfach oder mehrfach ungesättigter, gegebenenfalls verzweigter Kohlenwasserstoffrest mit 1 bis 24 C-Atomen ist, wobei
der relative Anteil der T-Gruppen aus T¹-, T²- und T³-Gruppen an der Gesamtsiliciumorganik der Kieselsäure größer 0,1% ist, wobei der relative Anteil der T¹-Gruppen (F_{T1} = I_{T1}/ (I_{T1} + I_{T2} +I_{T3}))
kleiner als 10% und der relative Anteil der T2-Gruppen (F_{T2} = I_{T2}/ (I_{T1} + I_{T2} +I_{T3})) größer als 5% ist, wobei eine T-Gruppe eine Monoalkyl-trisiloxygruppe R-Si(O-)₃, wobei die hochgestellte Zahl die Anzahl an Siloxanbindungen wiedergibt, so dass
T¹: R-Si(OR')₂-O-Si
T² : R-Si(OR')(-O-Si)₂
T₃: R-Si(-O-Si)₃, bedeutet,
wobei R ein Si-C-gebundener gegebenenfalls beliebig substituierter Alkylrest und R' eine Alkylgruppe oder ein Wasserstoffatom sein kann.

Überraschenderweise und in keiner Weise durch den Fachmann vorauszusehen wurde nun gefunden, daß eine Oberflächenmodifizierungsschicht, hergestellt nach dem erfindungsgemäßen Verfahren, aufweisend Dimethyldisiloxygruppen und Monomethyltrisiloxygruppen zu Kieselsäuren mit einem geringen Anteil an unreagierten Oberflächensilanolgruppen, bei gleichzeitig nicht relativ polarer Oberflächenmodifizierungsschicht, führt. Dabei werden Kieselsäuren mit Dialkyldihalogeno- bzw. Dialkyldialkoxysilanen oder Polydimethylsiloxanen (PDMS) unter oxidierenden Bedingungen, d.h. beispielsweise an Luft bei Temperaturen kleiner 400 °C umgesetzt. Unter diesen Reaktionsbedingungen bilden sich relativ polare SiOH-haltige Siloxanketten. Die SiOH-Gruppen lassen sich mittels ²⁹Si-CMPAS-NMR-Spektroskopie als T² -Gruppen nachweisen.
Unter einer T-Gruppe versteht man eine Monoalkyl-trisiloxygruppe R-Si(O-)₃, wobei die hochgestellt Zahl die Anzahl an Siloxanbindungen wiedergibt. D.h.
T¹: R-Si(OR')₂-O-Si
T²: R-Si(OR')(-O-Si)₂
T³ : R-Si(-O-Si)₃,
wobei R ein Si-C-gebundener gegebenenfalls beliebig substituierter Alkylrest und R' Alkylgruppe oder Wasserstoffatom sein kann.

Analog versteht man unter einer D-Gruppe eine Dialkyldisiloxygruppe (R-)₂Si(O-)₂.

Die erfindungsgemäß erhaltenen Kieselsäuren sind mit Gruppen der allgemeinen Formeln (I) und (II)

R₂Si(O-)₂ (I)

RSi(O-)₃ (II)

modifiziert, wobei
R ein einwertiger, gegebenenfalls einfach oder mehrfach ungesättigter, gegebenenfalls verzweigter Kohlenwasserstoffrest mit 1 bis 24 C-Atomen ist.

Bevorzugt handelt es sich bei Resten R um Alkylreste wie Methyl-, Ethyl-, Propyl-, Hexyl- wie n-Hexyl- oder i-Hexyl-, Octyl- wie n-Octyl- oder i-Octyl-, n-Dodecyl-, n-Hexadecyl-oder n-Octadecylreste. Besonders bevorzugt ist der Methylrest.

Bevorzugte Gruppen auf der Kieselsäureoberfläche sind die Dimethylsilyldioxygruppe (CH₃)₂Si(O-)₂ und die Methylsilyltrioxygruppe CH₃Si(O-)₃.

Die Kieselsäureoberfläche der erfindungsgemäß erhaltenen Kieselsäuren ist gleichzeitig mit beiden Gruppen der allgemeinen Formeln (I) (= D-Gruppen) und (II) (= T-Gruppen) modifiziert. Bevorzugt ist der relative Anteil der T-Gruppen an der Gesamtsiliciumorganik der Kieselsäure vorzugsweise größer 0,1%, besonders bevorzugt 0,1% bis 30%, ganz besonders bevorzugt 0,5% bis 20% und in einer speziellen Ausführung 1% bis 10%. Die einzelnen Anteile der Gesamtsiliciumorganik lassen sich beispielsweise erhalten mittels Integration der entsprechenden Signalintensitäten eines ²⁹Si-CPMAS-NMR-Spektrums, d.h. F_{T} = I_{T}/(I_{T} + I_{D}), wobei F_{T} der Anteil T-Gruppen und I_{T} bzw. I_{D} die NMR-Signalintensitäten der T- bzw. D-Gruppen sind.

Die T-Gruppen der erfindungsgemäß erhaltenen Kieselsäuren setzen sich zusammen aus T¹-, T²- und T³-Gruppen. Dabei ist der Anteil der T¹-Gruppen (F_{T1} = I_{T1}/ (I_{T1} + I_{T2} +I_{T3})) vorzugsweise kleiner als 10%, bevorzugt kleiner als 5%, besonders bevorzugt kleiner als 1% und in einer speziellen Ausführung lassen sich keine T¹-Gruppen nachweisen.

Der relative Anteil der T²-Gruppen (F_{T2} = I_{T2}/(I_{T1} + I_{T2} +I_{T3})) ist vorzugsweise' größer als 5%, bevorzugt 5% bis 75°C, besonders bevorzugt 10% bis 50%.

Die erfindungsgemäß erhaltenen Kieselsäuren weisen einen geringeren Anteil unreagierter Oberflächensilanolgruppen auf als Kieselsäuren, die mit identischen Silyliermittelmengen aber unter Inertgas umgesetzt wurden. Vorzugsweise ist der Anteil unreagierter Oberflächensilanolgruppen um bis zu 90% niedriger, bevorzugt um bis zu 75% und besonders bevorzugt um bis zu 50% als bei Kieselsäuren, die mit identischen Silyliermittelmengen aber unter Inertgas umgesetzt wurden.

Die erfindungsgemäß erhaltenen Kieselsäuren weisen eine gleiche oder kleinere Methanolzahl auf als Kieselsäuren, die mit identischen Silyliermittelmengen aber unter Inertgas umgesetzt wurden. Vorzugsweise ist die Methanolzahl um bis zu 50% niedriger, bevorzugt um bis zu 25% und besonders bevorzugt um bis zu 20% als'bei Kieselsäuren, die mit identischen Silyliermittelmengen aber unter Inertgas umgesetzt wurden.

Die erfindungsgemäß erhaltenen Kieselsäuren weisen einen Kohlenstoffgehalt von größer 0,1 Gew.%, bevorzugt einen Kohlenstoffgehalt von 0,1 Gew.% bis 10 Gew.% und besonders bevorzugt einen Kohlenstoffgehalt von 0,5 Gew.% bis 7,5 Gew.% auf.

Die erfindungsgemäß erhaltenen Kieselsäuren weisen einen geringen Anteil an extrahierbaren siliciumorganischen Bestandteilen auf. Bevorzugt ist dieser Anteil kleiner 10 Gew.%, besonders bevorzugt kleiner 5 Gew.%.

Die erfindungsgemäß erhaltenen Kieselsäuren weisen eine DBP-Zahl von vorzugsweise kleiner 300, bevorzugt 250 - 100 und besonders bevorzugt von 225 - 150 auf.

Die erfindungsgemäß erhaltenen Kieselsäuren weisen eine hohe spezifische Oberflächen (gemäß DIN EN ISO 9227/DIN 66132) auf.

Bevorzugt ist die spezifische Oberfläche 10 m²/g bis 450 m²/g, bevorzugt 20 m²/g bis 400 m²/g und ganz,besonders bevorzugt 30 m²/g bis 350 m²/g.

Ein weiterer Gegenstand der Erfindung ist ein Verfahren zur Herstellung einer mit den Gruppen der allgemeinen Formel (I) und (II) modifizierten Kieselsäure, wobei die hydrophile Kieselsäure mit Silanen der allgemeinen Formel III,

R₂SiX₂ (III)

wobei X = Halogen, OH oder OR bedeutet und R die oben genannte Bedeutung hat
oder mit Siloxanen der allgemeinen Formel (IV),

(RₐSiX_{b}(O-)_{1/2})(Si(R)₂(O-)_{2/2})ₙ(-O)_{1/2}X_{b}SiRₐ)

wobei X und R die oben genannte Bedeutung haben und
a gleich 2 oder 3,
b gleich 0 oder 1 sind, mit der Maßgabe, daß a + b = 3 ist,
n gleich 1 bis 10⁴, bevorzugt 1 bis 1000, besonders bevorzugt 3 bis 100 ist, wobei die Viskosität der eingesetzten Polysiloxane größer 0,5 mPas, bevorzugt 1 mPas - 10⁶ mPas und besonders bevorzugt 1 mPas - 1000 mPas ist, bei 25°C,
oder mit beliebigen Gemischen der Silane der allgemeinen Formel (III) und/oder Siloxanen der allgemeinen Formel (IV), modifiziert wird,
mit der Maßgabe, dass bei Temperaturen unter 400 °C und unter oxidierenden'Bedingungen, beispielsweise Luft, Sauerstoff oder Lachgas, modifiziert wird.

Die oberflächenmodifizierte Kieselsäure kann in kontinuierlichen, oder diskontinuierlichen Verfahren hergestellt werden, das Verfahren zur Modifizierung kann aus einem oder mehreren Schritten aufgebaut sein. Bevorzugt wird die oberflächenmodifizierte Kieselsäure mittels eines verfahrens hergestellt, bei dem der Herstellungsprozeß in getrennten Schritten erfolgt: (A) zunächst Herstellung der hydrophilen Kieselsäure, (B) die Modifizierung der Kieselsäure mit (1) Beladung der hydrophilen Kieselsäure mit Silanen der allgemeinen Formel (III), oder mit Siloxanen der allgemeinen Formel (IV) oder mit beliebigen Gemischen der Silane der allgemeinen Formel (III) und/oder Siloxanen der allgemeinen Formel (IV),

(2) Reaktion der Kieselsäure mit den aufgebrachten Verbindungen und (C) Reinigung der Kieselsäure von überschüssigen aufgebrachten Verbindungen und Nebenprodukten.

Die Oberflächenbehandlung wird bevorzugt in einer Atmosphäre durchgeführt, die zur partiellen Oxidation der modifizierten Kieselsäure führt, d.h. vorzugsweise Lachgas, Sauerstoff oder Luft, vorzugsweise mehr als 5 Vol.% Sauerstoff, besonders bevorzugt mehr als 10 Vol.% Sauerstoff, besonders bevorzugt an Luft.

Belegung, Reaktion und Reinigung können als diskontinuierlicher oder kontinuierlicher Prozeß durchgeführt werden.

Aus technischen Gründen bevorzugt ist eine kontinuierliche Reaktionsführung.

Die Belegung (Schritt B1) erfolgt vorzugsweise bei Temperaturen unter 400 °C, bevorzugt von -30 bis 250 °C, weiter bevorzugt 20 bis 150 °C, besonders bevorzugt bei 20 bis 80 °C; in einer ganz besonders bevorzugten Ausführungsform erfolgt der Belegungsschritt bei,30 bis 50 °C.

Die Verweilzeit beträgt vorzugsweise 1 Min - 24 h, bevorzugt 15 Min bis 300 Min, aus Gründen der Raumzeitausbeute besonders bevorzugt 15 Min bis 240 Min.

Der Druck in der Belegung reicht von vorzugsweise schwachem Unterdruck bis 0,2 bar bis zum Überdruck von 100 bar, wobei aus technischen Gründen Normaldruck, das heißt druckfreies Arbeiten gegenüber Außen-/Atmosphären-Druck bevorzugt ist.

Die Silane der allgemeinen Formel III bzw. Siloxane der allgemeinen Formel IV werden bevorzugt in flüssiger Form zugefügt, und insbesondere der pulverförmigen Kieselsäure zugemischt. Die Verbindungen können dabei in reiner Form oder als Lösungen in bekannten technisch eingesetzten Lösungsmitteln wie z.B. Alkoholen wie z.B. Methanol, Ethanol, oder i-Propanol, Ethern wie z.B. Diethylether, THF, oder Dioxan, oder Kohlenwasserstoffen wie z.B. Hexanen oder Toluol zugemischt werden. Die Konzentration in der Lösung beträgt dabei vorzugsweise 5 - 95 Gew.%, bevorzugt 30 - 95 Gew.%, besonders bevorzugt 50 - 95 Gew.%.

Das Zumischen geschieht vorzugsweise durch Düsentechniken, oder vergleichbare Techniken, wie effektive Verdüsungstechniken, wie Verdüsen in 1-Stoffdüsen unter Druck (vorzugsweise 5 bis 20 bar), Versprühen in 2-Stoffdüsen unter Druck (vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung der Silane der allgemeinen Formel III bzw. Siloxane der allgemeinen Formel IV mit der pulverförmigen Kieselsäure erlauben.

Das Aerosol kann von oben auf den fluidisierten Feststoff aufgedüst werden oder in den fluidisierten Feststoff hinein gedüst werden.

Bevorzugt werden die Silane der allgemeinen Formel III bzw. Siloxane der allgemeinen Formel IV als feinstverteiltes Aerosol zügefügt, dadurch gekennzeichnet, daß das Aerosol eine Sinkgeschwindigkeit von 0,1 - 20 cm/s aufweist.

Handelt es sich bei den Silanen der allgemeinen Formel III bzw. Siloxane der allgemeinen Formel IV um'unzersetzt verdampfbare Verbindungen, d.h. um Verbindungen deren Siedepunkt bei Normaldruck kleiner 200 °C ist, so werden diese vorzugsweise als Dampf der pulverförmigen Kieselsäure zugemischt.

Gegebenenfalls können protische Lösungsmittel den Silanen der allgemeinen Formel III bzw. Siloxane der allgemeinen Formel IV hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew.% an protischen Lösungsmittel bezogen auf die Kieselsäure zugefügt, besonders bevorzugt 5 bis 25 Gew.%. Besonders bevorzugt ist Wasser.

Wahlweise können ferner saure Katalysatoren, von saurem Charakter im Sinne einer Lewis Säure oder einer Brönsted Säure, wie Chlorwasserstoff oder basische Katalysatoren, von basischem Charakter im Sinne einer Lewis Base oder einer Brönsted Base, wie Ammoniak oder Amine wie Triethylamin, zugesetzt werden. Bevorzugt werden diese in Spuren zugesetzt, d.h. kleiner als 1000 ppm. Besonders bevorzugt werden keine Katalysatoren zugesetzt.

Bevorzugt erfolgt die Beladung der Kieselsäure und die Reaktion mit den Silanen der allgemeinen Formel III bzw. mit Siloxanen der allgemeinen Formel IV unter mechanischer oder gasgetragener Fluidisierung.

Eine Gas-getragene Fluidisierung kann durch inerte oder sauerstoffhaltige Prozessgase erfolgen, bevorzugt erfolgt die Fluidisierung durch Luft. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s.

Besonders bevorzugt ist die mechanische Fluidisierung, die ohne zusätzlichen hinausgehenden Gaseinsatz, durch Flügelrührer, Ankerrührer, und sonstige geeignete Rührorgane erfolgt.

Die Reaktion (Schritt B2) erfolgt vorzugsweise bei Temperaturen kleiner 400 °C, bevorzugt bei Temperaturen von 20 - 380 °C, besonders bevorzugt 100 - 350 °C und ganz besonders bevorzugt bei 150 - 350 °C.

Die Abreinigung (Schritt C) erfolgt vorzugsweise bei einer Reinigungstemperatur von 20 bis 400 °C, bevorzugt 50°C bis 350°C, besonders bevorzugt von 100 bis 300 °C.

Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, daß bevorzugt ein Mischen und ein Fluidisieren, jedoch nicht völlige Verwirbelung, eintritt.

Der Reinigungsschritt kann weiterhin durch erhöhten Gaseintrag gekennzeichnet sein, entsprechend einer Leerrohrgasgeschwindigkeit von vorzugsweise 0,001 bis 10 cm/s, bevorzugt 0,01 bis 1 cm/s. Dies kann durch alle inerten Gase erfolgen, die nicht mit den Silanen der allgemeinen Formel II, der Kieselsäure, und der modifizierten Kieselsäure reagieren, also nicht zu Nebenreaktionen, Abbaureaktionen, Oxidationsvorgängen und Flammen- und Explosionserscheinungen führen, wie vorzugsweise N₂, Ar, andere Edelgase, CO₂, etc, oder auch durch sauerstoffhaltige Gase, vorzugsweise durch Luft.

In einer besonders bevorzugten Ausführung werden nicht abreagierte Silane der allgemeinen Formel III bzw. Siloxane der allgemeinen Formel IV und Abgase aus dem Reinigungsschritt wieder in den Schritt der Belegung und Beladung der Kieselsäure zurückgeführt; dies kann teilweise oder vollständig geschehen, bevorzugt zu 10 - 90 % des gesamten Volumenstromes der aus der Abreinigung austretenden Gasvolumina.

Dies geschieht in geeignet temperierten Vorrichtungen.
Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmembranpumpen. Da die Rückführung der nichtkondensierten Phase bevorzugt ist, empfiehlt sich gegebenenfalls die Beheizung der rückführenden Leitungen.

Die Rückführung der nicht abreagierten Silane der allgemeinen Formel III bzw. Siloxane der allgemeinen Formel IV und der Abgase kann dabei zwischen vorzugsweise 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes Silan zwischen 1 und 200 Teile, bevorzugt 10 bis 30 Teile betragen.

Die Rückführung der Abreinigungsprodukte der Modifizierungsreaktion in die Belegung erfolgt bevorzugt kontinuierlich.

Zusätzlich können während der Modifizierung oder im Anschluß an die Reinigung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Modifizierung, im Schritt (II) der Reaktion durch Preßwalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluß an die Reinigung Verfahren zur mechanischen Verdichtung der Kieselsäure eingesetzt, wie Verdichten durch Absaugen des Luft- oder Gasinhaltes durch geeignete Vakuummethoden oder Preßwalzen oder Kombination von beiden Verfahren.

Zusätzlich können in einer besonders bevorzugten Verfahrensweise im Anschluß an die Reinigung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

Die Erfindung betrifft ferner ein Verfahren zur Verwendung der erfindungsgemäß erhaltenen Kieselsäuren in Systemen von niedriger bis hoher Polarität als viskositätsgebende Komponente. Dies betrifft alle lösemittelfreie, lösemittelhaltige, filmbildende Anstrichmittel, gummiartige bis harte Beschichtungen, Klebstoffe, Versiegelungs- und Vergußmassen sowie andere vergleichbare Systeme.

Die erfindungsgemäßen Kieselsäuren können beispielsweise eingesetzt werden in Systemen, wie:
- Epoxidsysteme
- Polyurethansysteme (PUR)
- Vinylesterharze
- Ungesättigte Polyesterharze
- Lösemittelarme Harzsysteme, sogenannte "high solids".
- Lösemittelfreie Harze, die in Pulverform z.B. als Beschichtungsstoffe appliziert werden.

Die erfindungsgemäßen Kieselsäuren liefern als rheologisches Additiv in diesen Systemen die erforderte notwendige Viskosität, Strukturviskosität, Thixotropie und eine für das Standvermögen an senkrechten Flächen ausreichende Fließgrenze.

Die Erfindung betrifft ferner den Einsatz der erfindungsgemäß erhaltenen Kieselsäuren in katalytisch vernetzenden Beschichtungen, Klebstoffen oder Dichtstoffen, wie beispielsweise 1-Komponenten-Systemen wie beispielsweise feuchtigkeitsvernetzenden 1-Komponenten-Polyurethan-Klebstoffen oder -Beschichtungsstoffen zur Verbesserung der Lagerstabilität der unvernetzten Formulierung. Die erfindungsgemäßen Kieselsäuren zeichnen sich dabei durch eine Retardierung der üblicherweise eingesetzten Katalysatoren aus. Typischerweise eingesetzte Katalysatoren sind beispielsweise basische Verbindungen, wie Amine, wie beispielsweise Triethylamin, Ethylendiamine wie Triethylendiamin, Morpholine wie N-Alkylmorpholine, Piperazin und dessen Derivate oder Pyridin und dessen Derivate, oder Organometallverbindungen wie beispielsweise Organozinnverbindungen wie Dibutylzinndilaurat, Tributylzinnacetat, Dibutylzinndichlorid oder Zinnoctoat, oder andere Organometallverbindungen wie Cobaltverbindungen wie Cobaltbenzoat oder Cobaltoctoat oder Cobaltnaphtbenat oder Titanverbindungen wie Dibutyltitandichlorid, oder Eisenverbindüngen wie Eisenoctoat.

Der Anteil der erfindungsgemäßen Kieselsäuren beträgt dabei vorzugsweise 0,1 bis 20 Gew.%, bevorzugt 0,5 bis 15 Gew.% und besonders bevorzugt 1 bis 10 Gew.% bezogen auf das Gesamtgewicht der Formulierung.

Dies bedeutet, daß in einem Temperaturbelastungstest bei 80 °C feuchtigkeitsvernetzende katalysierte 1-Komponenten-Polyurethan-Klebstoffe oder -Beschichtungsstoffe enthaltend die erfindungsgemäßen Kieselsäuren, im Vergleich zu 1-Komponenten-Polyurethan-Klebstoffe oder -Beschichtungsstoffen enthaltend hydrophobe Kieselsäuren ohne den erfindungsgemäßen T-Gruppen-Anteil, einen deutlich verlangsamten Anstieg der Viskosität aufweisen. Vorzugsweise verlängert sich die Zeitspanne bis zum Erreichen der 2-fach höheren Viskosität im Vergleich zur Ausgangsviskosität um den Faktor 10, bevorzugt um den Faktor 5 und besonders bevorzugt um den Faktor 2.

Die erfindungsgemäß erhaltenen Kieselsäuren können ferner speziell eingesetzt werden als rheologisches Additiv und Verstärkerfüllstoff in unvernetzten und vernetzten Siliconsystemen, wie Siliconelastomeren, die aus Siliconpolymeren, wie Polydimethylsiloxanen, Füllstoffen, und weiteren Additiven zusammengesetzt sind, bestehen. Diese können z.B. mit Peroxiden vernetzt werden, oder über Additions-Reaktionen, die sogenannte Hydrosilylierungsreaktion, zwischen olefinischen Gruppen und Si-H Gruppen vernetzt werden, oder über Kondensationsreaktionen zwischen Silanolgruppen, z.B. solche, die unter Wassereinwirkung entstehen.

Die erfindungsgemäß erhaltenen Kieselsäuren können eingesetzt werden zur Verbesserung und Steuerung des Pulver-Fließverhaltens, und / oder zur Regulierung und Steuerung der triboelektrischen Ladungseigenschaften des Toners oder Entwicklers. Derartige Toner und Entwickler können bevorzugt bei elektrophotografischen Print- und Druckverfahren eingesetzt werden, auch sind sie einsetzbar bei direkten Bildübertragungsverfahren. Gleiches gilt auch für den Einsatz in Pulverlacken.

### Beispiele

### Beispiel 1:

Bei einer Temperatur von 25 °C unter Inertgas N₂ werden zu 100 g hydrophiler Kieselsäure, mit einer Feuchte kleiner 1% und einem HCl Gehalt kleiner 100 ppm und mit einer spezifischen Oberfläche von 150 m²/g (gemessen nach der BET Methode nach DIN EN ISO 9227/DIN 66132) (erhältlich unter dem Namen HDK^{®} V15 bei Wacker-Chemie AG, München, D), durch Verdüsen über eine Zweistoffdüse (Druck 5 bar), 16 g eines Trimethylsiloxyterminierten Silikonöls mit einer Viskosität von 20 mPas bei 25°C zugefügt. Die so beladene Kieselsäure wird 2 h bei 300 °C in einem 100 l Trockenschrank in einem Luftstrom von 900 l/h zur Reaktion gebracht.

Die Analysendaten sind in Tabelle 1 aufgeführt.

### Beispiel 2 (Vergleichsbeispiel):

Bei einer Temperatur von 25 °C unter Inertgas N₂ werden zu 100 g hydrophiler Kieselsäure, mit einer Feuchte kleiner 1% und einem HCl Gehalt kleiner 100 ppm und mit einer spezifischen Oberfläche von 150 m²/g (gemessen nach der BET Methode nach DIN EN ISO 9227/DIN 66132) (erhältlich unter dem Namen HDK^{®} V15 bei Wacker-Chemie AG, München, D), durch Verdüsen über eine Zweistoffdüse (Druck 5 bar), 16 g eines Trimethylsiloxy-terminierten Silikonöls (F_{T} / % = 0) mit einer Viskosität von 20 mPas bei 25°C zugefügt. Die so beladene Kieselsäure wird 2 h bei 300 °C in einem 100 l Trockenschrank in einem N₂-Strom von 900 l/h zur Reaktion gebracht.

Die Analysedaten sind in Tabelle 1 aufgeführt.

### Beispiel 3:

Bei einer Temperatur von 25 °C unter Inertgas N₂ werden zu 100 g hydrophiler Kieselsäure, mit einer Feuchte kleiner 1% und einem HCl Gehalt kleiner 100 ppm und mit einer spezifischen Oberfläche von 300 m²/g (gemessen nach der BET Methode nach DIN EN ISO 9227/DIN 66132) (erhältlich unter dem Namen HDX^{⊗} T30 bei Wacker-Chemie AG, München, D), durch Verdüsen über eine Zweistoffdüse (Druck 5 bar), 27 g eines OH-terminierten Silikonöls mit einer Viskosität von ca. 35 mPas bei 25°C zugefugt. Die so beladene Kieselsäure wird 2 h bei 300 °C in einem 100 1 Trockenschrank in einem Luftstrom von 900 l/h zur Reaktion gebracht.

Die Analysendaten sind in Tabelle 1 aufgeführt.

### Beispiel 4:

Bei einer Temperatur von 25 °C unter Inertgas N₂ werden zu 100 g hydrophiler Kieselsäure, mit einer Feuchte kleiner 1% und einem HCl Gehalt kleiner 100 ppm und mit einer spezifischen Oberfläche von 150 m²/g (gemessen nach der BET Methode nach DIN EN ISO 9227/DIN 66132) (erhältlich unter dem Namen HDK^{®} V15 bei Wacker-Chemie AG, München, D), durch Verdüsen über eine Zweistoffdüse (Druck 5 bar), 1,89 g vollentsalztes Wasser und anschließend 6,4 g Dimethyldichlorsilan zugefügt. Die so beladene Kieselsäure wird 1 h bei 80 °C und 2 h bei 300 °C in einem 100 l Trockenschrank in einem Luftstrom von 900 l/h zur Reaktion gebracht.

Die Analysendaten sind in Tabelle 1 aufgeführt.

### Beispiel 5 (Vergleichsbeispiel):

Bei einer Temperatur von 25 °C unter Inertgas N₂ werden zu 100 g hydrophiler Kieselsäure, mit einer Feuchte kleiner 1% und einem HCl Gehalt kleiner 100 ppm und mit einer spezifischen Oberfläche von 150 m²/g (gemessen nach der BET Methode nach DIN EN ISO 9227/DIN 66132) (erhältlich unter dem Namen HDK^{®} V15 bei Wacker-Chemie AG, München, D), durch Verdüsen über eine Zweistoffdüse (Druck 5 bar), 1,89 g vollentsalztes Wasser und anschließend 6,4 g Dimethyldichlorsilan (F_{T} / % = 0) zugefügt. Die so beladene Kieselsäure wird 1 h bei 80 °C und 2 h bei 300 °C in einem 100 l Trockenschrank in einem N₂-Strom von 900 l/h zur Reaktion gebracht.

Die Analysendaten sind in Tabelle 1 aufgeführt.

**Tabelle 1**

| Beispiel | %C | % Rest-SiOH | MZ | F_{T} / % | t₂ /min |
|---|---|---|---|---|---|
| 1 | 3,2 | 19 | 73 | 4 | 4, 5 |
| 2 | 3,7 | 29 | 77 | 0 | 2,25 |
| 3 | 5,4 | 10 | 74 | 7 | 4,8 |
| 4 | 1,1 | 53 | 35 | 5 | n.b. |
| 5 | 1,0 | 55 | 42 | 0 | n.b. |

### Beschreibung der Analysenmethoden

1. Kohlenstoffgehalt (%C)
   - Elementaranalyse auf Kohlenstoff; Verbrennen der Probe bei über 1000°C im O₂-Strom, Detektion und Quantifizierung des entstehenden CO₂ mit IR; Gerät LECO 244
2. Restgehalt an nicht modifizierten Kieselsäure -Silanolgruppen
   - Methode: Säure-Base-Titration der in Wasser/Methanol = 50:50 suspendierten Kieselsäure; Titration im Bereich oberhalb des pH-Bereichs des isoelektrischen Punktes und unterhalb des pH-Bereichs der Auflösung der Kieselsäure
   - unbehandelte Kieselsäure mit 100% SiOH (Kieselsäuren - Oberflächensilanolgruppen): SiOH-phil = 2 SiOH / nm²
   - silylierte Kieselsäure: SiOH-silyl
   - Kieselsäure-Rest-Silanolgehalt: %Rest-SiOH = SiOH-silyl/SiOH-phil*100% (analog G.W. Sears Anal. Chem, 28 (12), (1950), 1981)
3. Methanolzahl: Einschütteln eines gleichen Volumens der Kieselsäure mit gleichem Volumen an Wasser-Methanol Gemisch
   - Start mit 0% Methanol, bei Nicht-Benetzung schwimmt Kieselsäure auf: Es ist ein Gemisch mit um 5 Vol% höherem MeOH Gehalt zu verwenden
   - bei Benetzung sinkt Kieselsäure ein: Anteil MeOH (%) in Wasser gibt MZ (MZ = Methanolzahl)'
4. Relativer Anteil der T-Gruppen (F_{T}): ²⁹Si-Festkörper-NMR-Spektrum gemessen im CPMAS-Modus
5. Zeitspanne bis zum Anstieg der Ausgangsviskosität um den Faktor 2 (t₂): 2,3 Gew.% der zu prüfenden Kieselsäure wurden an einem Dissolver in ein MDI-Präpolymer (Desmodur E 210 der Fa. Bayer MaterialScience) eindispergiert. 0,33 g der Mischung wurde auf der Meßplatte eines Brookfield-Rheometers CAP 2000 mit Kegel 2 aufgebracht und mit 0,01 g Zinnkatalysator COTIN 200 versetzt. Die Messung wurde bei einer konstanten Umdrehungsgeschwindigkeit von 50 min⁻¹ bei einer Temperatur von 80 °C durchgeführt. Die Messung wurde abgebrochen sobald irreguläres Verhalten durch Wandgleiteffekte der vernetzten Probe zu beobachten war. Datenpunkte wurden alle 5 s aufgezeichnet.

## Patentansprüche

1. Kieselsäuren, die mit Gruppen der allgemeinen Formeln (I) und (II)
R₂Si(O-)₂ (I)
RSi(O-)₃- (II)
modifiziert sind, wobei
R ein einwertiger, gegebenenfalls einfach oder mehrfach ungesättigter, gegebenenfalls verzweigter Kohlenwasserstoffrest mit 1 bis 24 C-Atomen ist, wobei
der relative Anteil der T-Gruppen aus T¹-, T²- und T³-Gruppen an der Gesamtsiliciumorganik der Kieselsäure größer 0,1% ist, wobei der relative Anteil der T¹-Gruppen (F_{T1} = I_{T1}/(I_{T1} + I_{T2} + I_{T3})) kleiner als 10% und der relative Anteil der T2-Gruppen (F_{T2} = I_{T2}/ I_{T1} + I_{T2} I_{T3})) größer als 5% ist, wobei eine T-Gruppe eine Monoalkyl-trisiloxygruppe R-Si(O-)₃ ist, wobei die hochgestellt Zahl die Anzahl an Siloxanbindungen wiedergibt, so dass
T¹: R-Si(OR')₂-O-Si
T²: R-Si(OR')(-O-Si)₂
T³: R-Si(-O-Si)₃, bedeutet,
wobei R ein Si-C-gebundener gegebenenfalls beliebig substituierter Alkylrest und R' Alkylgruppe oder Wasserstoffatom sein kann.

2. Kieselsäuren nach Anspruch 1, **dadurch gekennzeichnet, dass** es sich bei Resten R um Alkylreste wie Methyl-, Ethyl-, Propyl-Hexyl- wie n-Hexyl- oder i-Hexyl-, Octyl- wie n-Octyl- oder i-Octyl-, n-Dodecyl-, n-Hexadecyl- oder n-Octadecylreste, handelt.

3. Kieselsäuren nach Anspruch 1 oder 2, **dadurch gekennzeichnet, dass** sich auf der Kieselsäureoberfläche die Dimethylsilyldioxygruppe (CH₃)₂Si(O-)₂ und die Methylsilyltrioxygruppe CH₃Si(O-)₃ befinden.

4. Kieselsäuren nach einem oder mehreren der Ansprüche 1 - 3, **dadurch gekennzeichnet, dass** relative Anteil der T-Gruppen aus T¹-, T²- und T³-Gruppen an der Gesamtsiliciumorganik der Kieselsäure 0,1% bis 30% beträgt.

5. Kieselsäuren nach einem oder mehreren der Ansprüche 1 - 4, **dadurch gekennzeichnet, dass** der Anteil der T¹-Gruppen (F_{T1} = I_{T1}/ (I_{T1} + I_{T2} +I_{T3})) kleiner 5% ist.

6. Kieselsäuren nach einem oder mehreren der Ansprüche 1 - 5, **dadurch gekennzeichnet, dass** der relative Anteil der T2-Gruppen (F_{T2} - I_{T2}/(I_{T1} + I_{T2} +I_{T3})) 5% bis 75% beträgt.

7. Verfahren zur Herstellung einer mit den Gruppen der allgemeinen Formel (I) und (II) modifizierten Kieselsäure, wobei die hydrophile Kieselsäure mit Silanen der allgemeinen Formel III,
R₂SiX₂ (III)
wobei X = Halogen, OH oder OR bedeutet und R die oben genannte Bedeutung hat
oder mit Siloxanen der allgemeinen Formel (IV),
(RₐSiX_{b}(O-)_{1/2})(Si(R)₂(O-)_{2/2})ₙ(-O)_{1/2}X_{b}SiRₐ)
wobei X und R die oben genannten Bedeutung haben und
a gleich 2 oder 3,
b gleich 0 oder 1 sind, mit der Maßgabe, daß a + b = 3 ist, n gleich 1 bis 10⁴, wobei die Viskosität der eingesetzten Polysiloxane größer 0,5 mPas ist,
oder mit beliebigen Gemischen der Silane der allgemeinen Formel (III) und/oder Siloxanen der allgemeinen Formel (IV)
mit der Maßgabe, dass bei unter 400 °C und oxidierenden Bedingungen, modifiziert wird.

8. Verfahren zur Verwendung der Kieselsäuren nach einem oder mehreren der Ansprüche 1 - 7, **dadurch gekennzeichnet, daß** die Kieselsäuren zur Steuerung der Fließeigenschaften von Beschichtungen, Klebstoffen oder Dichtstoffen eingesetzt werden.

9. Verfahren zur Verwendung der Kieselsäuren nach einem oder mehreren der Ansprüche 1 - 7, **dadurch gekennzeichnet, daß** die Kieselsäuren zur Verbesserung der Lagerstabilität von katalytisch vernetzenden Beschichtungen, Klebstoffen und Dichtstoffen eingesetzt werden.

## Claims

1. Silicas which are modified with groups of the general formulae (I) and (II)
R₂Si(O-)₂ (I)
RSi(O-)₃- (II)
in which
R is a monovalent, optionally mono- or polyunsaturated, optionally branched hydrocarbon radical having 1 to 24 C atoms,
the relative proportion of the T groups comprising T¹, T² and T³ groups, based on the total organosilicon groups of the silica, being greater than 0.1%,
the relative proportion of T¹ groups (F_{T1} = I_{T1}/(I_{T1} + I_{T2} + I_{T3})) being less than 10% and the relative proportion of the T2 groups (F_{T2} = I_{T2}/ (I_{T1} + I_{T2} + I_{T3})) being greater than 5%, a T group being a monoalkyl-trisilyloxy group R-Si(O-)₃, the superscript number indicating the number of siloxane bonds, so that
T¹ is R-Si(OR')₂-O-Si
T² is R-Si(OR')(-O-Si)₂
T³ is R-Si(-O-Si)₃,
where R may be an Si-C-bonded, optionally arbitrarily substituted alkyl radical and R' may be an alkyl group or a hydrogen atom.

2. Silicas according to Claim 1, **characterized in that** radicals R are alkyl radicals, such as methyl, ethyl, propyl, hexyl, such as n-hexyl or isohexyl, octyl, such as n-octyl or isooctyl, n-dodecyl, n-hexadecyl or n-octadecyl radicals.

3. Silicas according to Claim 1 or 2, **characterized in that** the dimethylsilyldioxy group (CH₃)₂Si(O-)₂ and the methylsilyltrioxy group CH₃Si(O-)₃ are present on the silica surface.

4. Silicas according to one or more of Claims 1-3, **characterized in that** the relative proportion of the T groups comprising T¹, T² and T³ groups, based on the total organosilicon groups of the silica, is from 0.1% to 30%.

5. Silicas according to one or more of Claims 1-4, **characterized in that** the proportion of the T¹ groups (F_{T1} = I_{T1}/ (I_{T1} + I_{T2} + I_{T3})) is less than 5%.

6. Silicas according to one or more of Claims 1-5, **characterized in that** the relative proportion of the T2 groups (F_{T2} = I_{T2}/(I_{T1} + I_{T2} + I_{T3})) is from 5% to 75%.

7. Process for the preparation of a silica modified with the groups of the general formula (I) and (II), the hydrophilic silica being modified with silanes of the general formula III
R₂SiX₂ (III)
in which X is halogen, OH or OR and R has the above-mentioned meaning,
or with siloxanes of the general formula (IV)
(RₐSiX_{b}(O-)_{1/2})(Si(R)₂(O-)_{2/2})ₙ(-O)_{1/2}X_{b}SiRₐ)
in which X and R have the abovementioned meaning and
a is 2 or 3,
b is 0 or 1, with the proviso that a + b = 3,
n is from 1 to 10⁴, the viscosity of the polysiloxanes used being greater than 0.5 mPa·s,
or with any desired mixtures of the silanes of the general formula (III) and/or siloxanes of the general formula (IV),
with the proviso that modification is effected at below 400°C and under oxidizing conditions.

8. Method for using the silicas according to one or more of Claims 1-7, **characterized in that** the silicas are used for controlling the flow properties of coatings, adhesives or sealants.

9. Method for using the silicas according to one or more of Claims 1-7, **characterized in that** the silicas are used for improving the storage stability of catalytically crosslinking coatings, adhesives and sealants.

## Revendications

1. Silices, modifiées par des groupes des formules générales (I) et (II)
R₂Si(O-)₂ (I)
RSi(O-)₃- (II)
dans lesquelles
R représente un radical hydrocarboné monovalent, le cas échéant monoinsaturé ou polyinsaturé, le cas échéant ramifié, comprenant 1 à 24 atomes de carbone, la proportion relative des groupes T, constitués de groupes T¹, T² et T³, par rapport à la partie organosiliciée totale de la silice, étant supérieure à 0,1%, la proportion relative de groupes T¹ (F_{T1} = I_{T1}/(I_{T1} + I_{T2} + I_{T3})) étant inférieure à 10% et la proportion relative de groupes T2 (F_{T2} = I_{T2}/ (I_{T1} + I_{T2} +I_{T3})) étant supérieure à 5%, un groupe T représentant un groupe monoalkyltrisiloxy R-Si(O-)₃, le nombre en exposant reflétant le nombre de liaisons siloxane, de telle sorte que
T¹ : signifie R-Si(OR')₂-O-Si
T² : signifie R-Si(OR')(-O-Si)₂
T³ : signifie R-Si(-O-Si)₃,
R pouvant être un radical alkyle lié par SiC, le cas échéant substitué de manière quelconque et R' pouvant être un groupe alkyle ou un atome d'hydrogène.

2. Silices selon la revendication 1, **caractérisées en ce qu'**il s'agit, pour les radicaux R, de radicaux tels que les radicaux méthyle, éthyle, propyle, hexyle, tels que n-hexyle ou i-hexyle, octyle, tels que n-octyle ou i-octyle, n-dodécyle, n-hexadécyle ou n-octadécyle.

3. Silices selon la revendication 1 ou 2, **caractérisées en ce que** la surface de silice présente le groupe diméthylsilyldioxy (CH₃)₂Si(O-)₂ et le groupe méthylsilyltrioxy CH₃Si(O-)₃.

4. Silices selon l'une ou plusieurs des revendications 1 à 3, **caractérisées en ce que** la proportion relative de groupes T, constitués par des groupes T¹, T² et T³, par rapport à la partie organosiliciée totale de la silice, est de 0,1% à 30%.

5. Silices selon l'une ou plusieurs des revendications 1 à 4, **caractérisées en ce que** la proportion de groupes T¹ (F_{T1} = I_{T1}/(I_{T1} + I_{T2} + I_{T3})) est inférieure à 5%.

6. Silices selon l'une ou plusieurs des revendications 1 à 5, **caractérisées en ce que** la proportion relative de groupes T2 (F_{T2} = I_{T2}/ (I_{T1} + I_{T2} + I_{T3})) est de 5% à 75%.

7. Procédé pour la préparation d'une silice modifiée par les groupes des formules générales (I) et (II), la silice hydrophile étant modifiée par des silanes de formule générale III,
R₂SiX₂ (III)
dans laquelle
X = signifie halogène, OH ou OR et R présente la signification susmentionnée
ou par des siloxanes de formule générale (IV)
(RₐSiX_{b}(O-)_{1/2})(Si(R)₂(O-)_{2/2})ₙ(-O)_{1/2}X_{b}SiRₐ)
dans laquelle
X et R ont la signification susmentionnée et
a vaut 2 ou 3,
b vaut 0 ou 1, à condition que a + b = 3,
n vaut 1 à 10⁴, la viscosité des polysiloxanes utilisés étant supérieure à 0,5 mPa.s,
ou par des mélanges quelconques des silanes de formule générale (III) et/ou des siloxanes de formule générale (IV)
à condition qu'on modifie à moins de 400°C et dans des conditions oxydantes.

8. Procédé pour l'utilisation des silices selon l'une ou plusieurs des revendications 1 à 7, **caractérisé en ce que** les silices sont utilisées pour la régulation des propriétés d'écoulement de revêtements, d'adhésifs ou de matériaux d'étanchéité.

9. Procédé pour l'utilisation des silices selon l'une ou plusieurs des revendications 1 à 7, **caractérisé en ce que** les silices sont utilisées pour améliorer la stabilité à l'entreposage de revêtements, d'adhésifs ou de matériaux d'étanchéité réticulés par voie catalytique.
